(19) Europäisches Patentamt
European Patent Office
Office européen des brevets

(11) **EP 3 753 229 B1**

(12) **EUROPEAN PATENT SPECIFICATION**

(45) Date of publication and mention
of the grant of the patent:
**02.08.2023 Bulletin 2023/31**

(21) Application number: **18710805.5**

(22) Date of filing: **02.03.2018**

(51) International Patent Classification (IPC):
**H04W 4/18** (2009.01)

(52) Cooperative Patent Classification (CPC):
**H04W 4/18; H04L 65/611; H04L 65/612;
H04L 67/06; H04L 67/568; H04L 67/5681**

(86) International application number:
**PCT/EP2018/055221**

(87) International publication number:
**WO 2019/166106 (06.09.2019 Gazette 2019/36)**

(54) **DEVICES AND METHODS FOR CODED CACHING**

VORRICHTUNGEN UND VERFAHREN FÜR CODIERTES CACHING

DISPOSITIFS ET PROCÉDÉS DE MISE EN CACHE CODÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.12.2020 Bulletin 2020/52**

(73) Proprietor: **HUAWEI TECHNOLOGIES CO., LTD.
Shenzhen, Guangdong 518129 (CN)**

(72) Inventors:
• DESTOUNIS, Apostolos
80992 Munich (DE)
• GHORBEL, Asma
Shenzhen, Guangdong
518129 (CN)
• KOBAYASHI, Mari
Shenzhen, Guangdong
518129 (CN)
• PASCHOS, Georgios
80992 Munich (DE)

(74) Representative: **Goddar, Heinz J.
Boehmert & Boehmert
Anwaltspartnerschaft mbB
Pettenkoferstrasse 22
80336 München (DE)**

(56) References cited:
• **APOSTOLOS DESTOUNIS ET AL: "Alpha Fair
Coded Caching", ARXIV.ORG, CORNELL
UNIVERSITY LIBRARY, 201 OLIN LIBRARY
CORNELL UNIVERSITY ITHACA, NY 14853, 26
January 2017 (2017-01-26), XP080751800, DOI:
10.23919/WIOPT.2017.7959906 cited in the
application**
• **APOSTOLOS DESTOUNIS ET AL: "Adaptive
Coded Caching for Fair Delivery over Fading
Channels", ARXIV.ORG, CORNELL UNIVERSITY
LIBRARY, 201 OLIN LIBRARY CORNELL
UNIVERSITY ITHACA, NY 14853, 7 February 2018
(2018-02-07), XP080856134,**

**Description**

TECHNICAL FIELD

In general, the present invention relates to the field of telecommunications. More specifically, the present invention relates to a network entity for distributing a plurality of files to a plurality of receiver devices as well as a corresponding method.

BACKGROUND

One of the key challenges for future wireless communication networks is the ever increasing video traffic demand, which reached 70% of the total mobile IP traffic in 2015. Classical downlink systems cannot meet this demand since they have limited resource blocks, and therefore as the number of simultaneous video transfers K increases, the per-video throughput decreases as 1/K. Recently it was shown that scalable per-video throughput can be achieved if the communications are synergistically designed with caching at the receivers. Indeed, the recent breakthrough of coded caching has inspired a rethinking of wireless downlink communication. However, the state of the art methods do not provide gains in realistic wireless channels with fading and/or users at different distances from the transmitter.

The standard solution used in current wireless communication networks to make more efficient use of the radio resources in order to handle the increase in data demand and to provide some fairness to the users is opportunistic scheduling. The main idea behind opportunistic scheduling is to exploit the temporal variations on users' wireless channels by transmitting to users whose channel conditions are favourable. In practice most 3G, 3.5G and 4G wireless communication networks employ variations of the so-called proportional fair scheduler. This approach however does not exploit the memory of the receiving devices and the per-user throughput scales badly with the number of users, i.e. receiver devices, namely at best as loglog(K)/K, where K is the number of users.

In order to eliminate this bottleneck, a new idea, coded caching, has been proposed in the seminal article M.A. Maddah-Ali, U. Niesen, "Fundamental Limits of Caching", IEEE Transactions on information Theory, vol. 60, no. 5, pp. 2856-2867, May 2014. Different aspects of coded caching have been disclosed in US 9,560,390, US 9,535,837 and US 9,401,951. Coded caching exploits the memory (also referred to as cache) of the receiver device(s) by storing parts of the files, e.g. videos, and then broadcasting appropriate combinations of file packets or segments to the receiver devices, taking into account the actual file requested and the contents of their caches, in order to minimize the number of transmissions needed, until all receiver devices can decode their requested files.

In theory coded caching can achieve a constant per-user throughput, which, however, is not the case in fading environments (like the ones encountered in mobile communication networks). If coded caching is applied to a fading environment, each transmission will be at the bitrate that can be supported by the receiver device with the worst channel quality, which brings down the total system performance.

A possible solution has been disclosed in the article A. Destounis, M. Kobayashi, G.

Paschos, A. Ghorbel, "Alpha Fair Coded Caching, 15th International Symposium on Modeling and Optimization in Mobile, Ad Hoc, and Wireless Networks (WiOpt), France, 15th - 19th May, 2017, where it is proposed to opportunistically transmit to and combine files of subsets of receiver devices. The proposed solution is, however, more of a theoretical nature, because (i) all possible multicast groups (which is a huge set) of receiver devices in the system must be used and (ii) it is assumed that the informationtheoretic limits of the rates over wireless broadcast channels can be achieved.

In light of the above, there is a need for improved devices and methods for distributing files to a plurality of receiver devices.

SUMMARY

The invention is defined by the subject matter of the independent claims. Advantageous enhancements are subject to the dependent claims.

BRIEF DESCRIPTION OF THE DRAWINGS

Further embodiments of the invention will be described with respect to the following figures, wherein:

Figure 1 shows a schematic diagram of a wireless communication network comprising a network entity for distributing files according to an embodiment;
Figure 2 shows a schematic diagram comparing different aspects of the invention according to an embodiment with a conventional wireless downlink system;
Figure 3 shows a schematic diagram illustrating a system model for illustrating different aspects of the invention according to an embodiment;
Figure 4 shows a schematic diagram illustrating the scheduling of file segments as implemented in a network entity according to an embodiment;
Figure 5 shows a schematic diagram illustrating the scheduling of file segments as implemented in a network entity according to a further embodiment;
Figures 6a and 6b show graphs illustrating the performance of embodiments of the invention; and
Figure 7 shows a schematic diagram illustrating a method of distributing a plurality of files to a plurality of receiver devices according to an embodiment.

In the various figures, identical reference signs will be used for identical or at least functionally equivalent features.

DETECTED DESCRIPTION OF EMBODIMENTS

In the following description, reference is made to the accompanying drawings, which form part of the disclosure, and in which are shown, by way of illustration, specific aspects in which the present invention may be placed. It will be appreciated that other aspects may be utilized and structural or logical changes may be.

For instance, it will be appreciated that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims embodiments with different functional blocks or processing units are described, which are connected with each other or exchange signals. It will be appreciated that the present invention covers embodiments as well, which include additional functional blocks or processing units that are arranged between the functional blocks or processing units of the embodiments described below.

Finally, it is understood that the features of the various exemplary aspects described herein may be combined with each other, unless specifically noted otherwise.

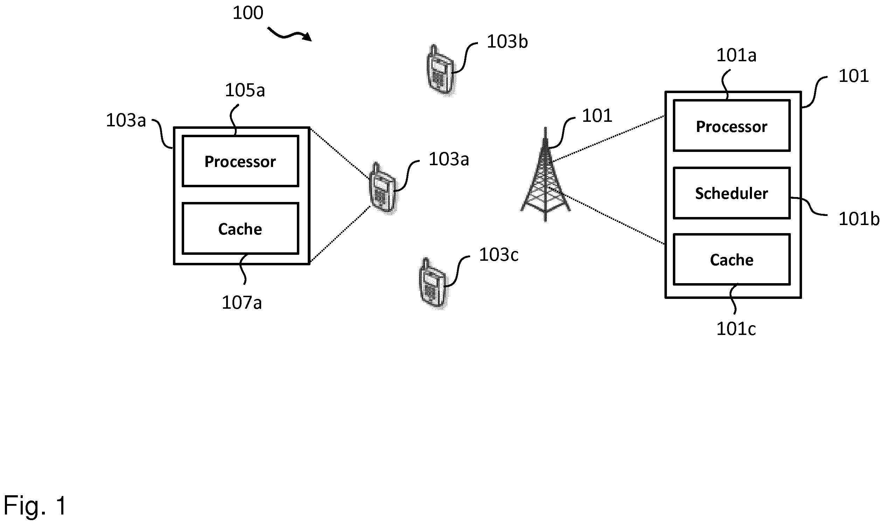

Figure 1 shows a schematic diagram of a wireless communication network 100 comprising a network entity 101 according to an embodiment. In an embodiment, the wireless communication network 100 is a cellular wireless communication network 100.

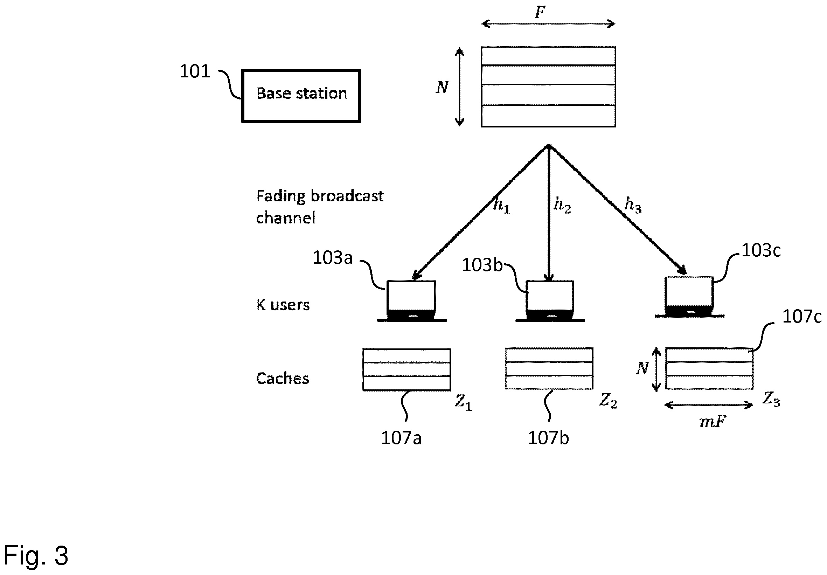

The network entity 101 is configured to distribute a plurality of files to a plurality of receiver devices 103a-c, including a first receiver device 103a and a second receiver device 103b. Each of the files can be segmented into a plurality of file segments and each of the plurality of receiver devices 103a-c comprises a cache 107a-c (also shown in figure 3) for caching one or more of the plurality of file segments. Each receiver device 103a-c can further comprise a processing unit 105a for processing file segments provided by the network entity 101, i.e. for decoding encoded file segments and/or combining file segments into an original file. As illustrated in figure 1, in an embodiment, the network entity 101 can comprise a cache 101c for storing files and file segments as well.

In an embodiment, the network entity 101 is a base station 101 and the plurality of receiver devices 103a-c are a plurality of user equipments 103a-c. In a further embodiment, the network entity 101 is a macro base station and the plurality of receiver devices 103a-c are a plurality of small cell base stations. The macro base station can communicate with the plurality of small cell base stations via wireless and/or wired connections, for instance, via a wired network at the application layer.

As can be taken from figure 1, the network entity 101 comprises a processing unit or processor 101a configured to encode for one or more of the plurality of files one or more file segments of the plurality of file segments of the respective file. In an embodiment, the processing unit 101a of the network entity 101 can be configured to encode the one or more file segments of the plurality of file segments of the respective file of the one or more of the plurality of files using an XOR operation.

Moreover, as will be described in more detail further below, the network entity 101 comprises a scheduler 101b configured to schedule the transmission of the plurality of (possibly encoded) file segments to the plurality of receiver devices 103a-c using a plurality of queues of file segments, including a first queue and a second queue, such that the number of the plurality of queues is larger than or equal to the number of the plurality of receiver devices 103a-c and smaller than twice the number of the plurality of receiver devices 103a-c. For instance, in a scenario, where the network entity 101 intends to distribute a plurality of files to 10 receiver devices 103a-c, the scheduler 101b can be configured to schedule the transmission of the plurality of (possibly encoded) file segments to the 10 receiver devices 103a-c using 10, 11, 12, 13, 14, 15, 16, 17, 18 or 19 queues of file segments.

As will be described in more detail further below, the scheduler 101b is further configured to assign the plurality of queues to the plurality of receiver devices 103a-c in such a way that the first queue comprises file segments for the first receiver device 103a only and the second queue comprises file segments for the second receiver device 103b as well as encoded file segments decodable by the first receiver device 103a and the second receiver device 103b. In an embodiment, the file segments for the first receiver device 103a, i.e. the file segments of the first queue, can be encoded as well.

In an embodiment, the scheduler 101b is configured to periodically reassign the plurality of queues to the plurality of receiver devices 103a-c.

In an embodiment, the plurality of receiver devices 103a-c comprise a third receiver device 103c and the plurality of queues comprise a third queue. In an embodiment, the scheduler 101b is further configured to assign the plurality of queues to the plurality of receiver devices 103a-c such that the third queue comprises file segments for the third receiver device 103c, encoded file segments decodable by the first receiver device 103a and the third receiver device 103c, encoded file segments decodable by the second receiver device 103b and the third receiver device 103c and encoded file segments decodable by the first receiver device 103a, the second receiver device 103b and the third receiver device 103c.

In an embodiment, the scheduler 101b of the network entity 101 is configured to schedule the transmission of the file segments to the plurality of receiver devices using the plurality of queues of file segments on the basis of a scheduling plan.

In an embodiment, the scheduler 101b of the network entity 101 is configured to schedule the transmission of the file segments to the plurality of receiver devices 103a-c on the basis of a scheduling plan based on a gradient descent scheduling, GDS, scheme.

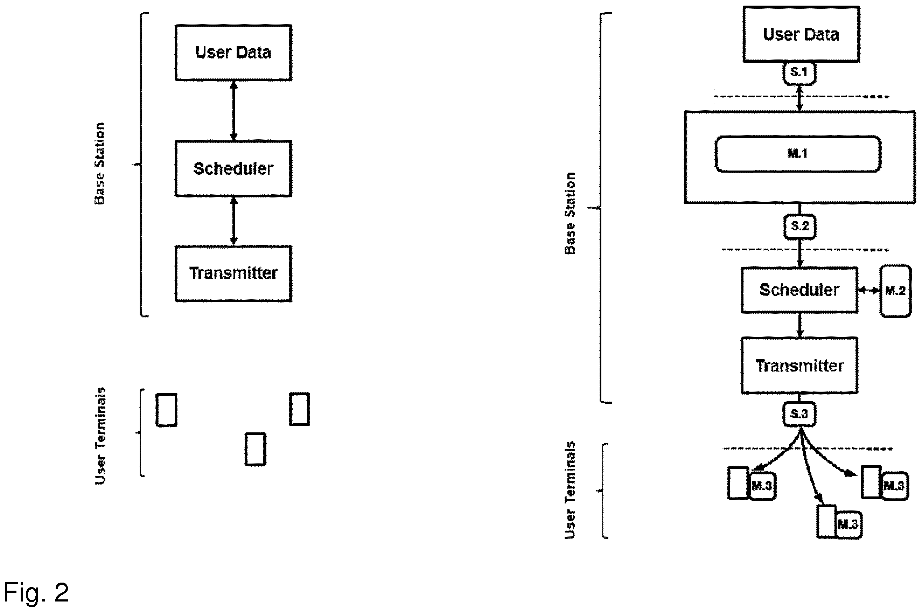

Figure 2 shows a schematic diagram comparing different aspects of the invention according to an embodiment with a conventional wireless downlink system. Here it is assumed that files requested to be delivered by each user equipment or receiver device have arrived at a transmitter of the base station 101 (the "User Data" part).

In a conventional system, shown on the left hand side of figure 2, at each time slot a user terminal will be selected and data for the selected user terminal are transmitted over the wireless channel.

In the network entity 101 according to an embodiment, which is illustrated on the right hand side of figure 2, there is an intermediate stage (herein referred to as method M.1), where, at each time slot (or at designated time instances e.g. periodically), the network entity 100 (or more specifically the transmitter thereof) selects files belonging to a subset of the receiver devices, i.e. the set S, and to combine these selected files. This means that the network entity 101 according to an embodiment is configured to generate codewords (i.e. bit sequences) for each subset of S such that if each subset of S receives the corresponding bits, all receiver devices of the set S can decode the file(s), which they requested and which were used in the combination.

For the exemplary case of a subset of 3 receiver devices or users (i.e. users 1,2,3) and one file per user the network entity according to an embodiment is configured to encode file segments thereof by generating the following codewords:

- $C_{\{1\}}$, $C_{\{2\}}$, $C_{\{3\}}$: useful only to each receiver devices individually
- $C_{\{12\}}$, $C_{\{23\}}$, $C_{\{13\}}$: useful to each subset of 2 receiver devices
- $C_{\{123\}}$: useful to all receiver devices

In an embodiment, the above codewords, i.e. encoded file segments, are designed by the processing unit 101a of the network entity 101 in such a way that each receiver device 103a-c can decode the file requested by combining these codewords with its cache content. In the above example, the first receiver device 1 should be able to retrieve its requested file on the basis of $C_{\{1\}}$, $C_{\{12\}}$, $C_{\{13\}}$, $C_{\{123\}}$, and its cache contents, and the procedure for the other receiver devices is similar (referred to as method M.3 in figure 2).

According to an embodiment, the network entity 101 is configured to limit the number of subsets of receiver devices for which codewords are generated, i.e. the number of queues, as already described above. For instance, in an embodiment, it is possible that no codewords are allowed to be generated for multicast groups {12} and {123}. This limits the number of multicast groups, i.e. transmission queues.

In an embodiment, the network entity 101 is configured to use multicast transmissions, since a codeword as generated by the procedure above, i.e. an encoded file segment, can be useful for multiple receiver devices 103a-c. In an embodiment, the scheduler 101b of the network entity 101, then, can combine the instantaneous channel state for each receiver device 103a-c with characteristics specific to each receiver device 103a-c and/or receive system-specific characteristics (such as higher priority for some receiver devices, fairness requirements on the file delivery rate,...) into a score for each multicast group, i.e. for each transmission queue, and selects the multicast group, i.e. transmission queue with the highest score for which the wireless transmission is done.

Thus, according to the invention, the processing unit 101a of the network entity 101 is configured to assign the plurality of transmission queues to the plurality of receiver devices 103a-c on the basis of a respective communication channel quality associated with the plurality of receiver devices 103a-c. In a further embodiment, the processing unit 101a is configured to assign the plurality of queues to the plurality of receiver devices 103a-c on the basis of the respective communication channel quality associated with each of the plurality of receiver devices 103a-c and a respective priority associated with each of the plurality of receiver devices 103a-c.

In the following a summary of the methods (M) performed by the network entity 101 according to an embodiment as well as the signals (S) transmitted by the network entity 101 according to an embodiment is provided under reference to figure 2:

Methods:

M.1) Method to combine file segments into codewords, i.e. encoded file segments to be multicast over the wireless channel (performed by the processing unit 101a)

M.2) Method to modify the weight/score calculation of each user/multicast group, i.e. transmission queue, by the scheduler 101b (for calculating a score per multicast group used), taking into account the codewords generated as well as channel fading states M.3) Method to decode the signals sent over the wireless channel, taking into account the user's cache state and file demands (performed by the receiver devices 103a-c)

Signals:

S.1) Requests for user data to be combined into codewords, i.e. encoded file segments (using method M.1) and sending these data (performed by the network entity 101)

S.2) Generated codewords, i.e. encoded file segments, to be scheduled over the wireless channel (performed by the network entity 101),

S.3) Signals providing the necessary information to enable the receiver devices 103a-c to decode their requested files from the multicast transmissions (over the wireless channel).

Embodiments of the invention allow exploiting both the multicast opportunities arising from the storage capabilities of the receiver devices 103a-c and the opportunism arising from the time variations of the wireless fading channels, thus achieving higher system throughput than the state of the art approaches, which only exploit only one of the aforementioned aspects while being agnostic to the other. More specifically, with respect to opportunistic scheduling used in conventional systems, embodiments of the invention benefit from the receivers' storage, which leads to exploiting multicasting opportunities. In the exemplary scenario of streaming 4K video in a cell under LTE specifications for the radio resources, embodiments of the invention provide a gain of up to 300% of the number of users that can be simultaneously supported with respect to a plain opportunistic scheduler (as used in current standards) and a gain of up to 33% over opportunistic scheduling where parts of the videos are cached to the user terminals but multicast opportunities are not exploited.

As already described above, for conventional coded caching all transmissions must be received by all receivers. In a setting, where channel qualities vary independently over time (e.g. due to fading), this means that all transmissions have to be done at the rate supported by the user with the worst channel quality, which has a detrimental effect on the efficiency of the system. Embodiments of the invention avoid this detrimental effect by appropriately combining files and balancing transmissions over different multicast groups, i.e. different transmission queues.

As already described above, a key concept implemented in the network entity 101 according to an embodiment is to dynamically select subsets of the set of receiver devices 103a-c for which files will be combined in order to create multicast opportunities and select the group of receivers to which multicast transmissions will be made according to the channel states and system objectives (in terms of fairness, efficiency, etc.), thereby combining multicasting opportunities and exploiting the time variations of the wireless medium.

As already described above, another key concept implemented in the network entity 101 according to an embodiment is to limit the number of multicast groups, i.e. transmission queues, that will be used from a possible $O(2^K)$ to $O(K)$, making the search for the best combination tractable, and allowing for algorithmic implementations that can pick the best group in a fine time granularity. Embodiments of the invention are backward compatible with the status quo scheduler used in conventional base stations (also known as PF scheduler), by making slight modifications in the weight computations.

Figure 3 shows a schematic diagram illustrating a system model for illustrating different aspects of the invention according to an embodiment. In an embodiment, the network entity 101 can be considered as a server of a content delivery system having $N$ files of size $F$ bits and having to convey requested files to $K$ users (i.e. receiver devices 103a-c) over a wireless downlink channel. In an embodiment, each receiver device 103a-c is equipped with cache 107a-c of size $M$ files. The normalized cache size is defined by $m = \dfrac{M}{N}$. In an embodiment, a standard block fading broadcast channel is considered such that the channel state remains constant over a slot of $T_{slot}$ channel uses and changes from one slot to another in an independent and identically distributed manner, i.e. at each slot the channel takes a state at random, independently of what happened to the previous slot but from the same distribution. In an embodiment, the channel output of the $k$-th user, i.e. receiver device 103a-c in any channel use of slot t is given by

$$y_k(t) = \sqrt{h_k(t)}x(t) + v_k(t)$$

where the channel input $x \in \mathbb{C}^{T_{slot}}$ is subject to the power constraint $\mathbb{E}\left[\|x\|^2\right] \leq PT_{slot}$ ; $v_k(t) \sim \mathcal{N}_\mathbb{C}(0, I_{T_{slot}})$ are additive white Gaussian noises with covariance matrix identity of size $T_{slot}$, assumed independent of each other; { $h_k(t) \in \mathbb{C}$ } are channel fading coefficients $\sim \beta_k^2 \exp(1)$ independently distributed across time and users, with $\beta_k$ denoting the path loss parameter of the k-th receiver device 103a-c.

In an embodiment, the performance metric is the time average delivery rate of files to the $k$-th user, i.e. receiver device 103a-c, denoted by $\overline{T}_k$. In an embodiment, a fair file delivery problem is considered, as defined by the following equation:

$$\max_{\overline{T}} \Sigma_{k=1}^{K} g(\overline{T}_k),$$

where the utility function corresponds to the alpha fair family of concave functions obtained by choosing:

$$g(x) = \begin{cases} \dfrac{(x+d)^\alpha}{1-\alpha} & for\ \alpha \neq 1 \\ \log\left(1 + \dfrac{x}{d}\right) & for\ \alpha = 1 \end{cases}$$

For the sake of completeness in the following some aspects of conventional decentralized coded caching are reviewed, as disclosed in M. Maddah-Ali and U. Niesen, "Decentralized Coded Caching Attains Order-Optimal Memory-Rate Tradeoff", IEEE/ACM Transactions on Networking, vol. 23, no. 4, pp. 1029-1040, 2015. Conventional decentralized coded caching operates in two phases:

(i) Placement phase, where each user independently caches a subset of $mF$ bits of each file, chosen uniformly at random. By letting $W_{i|\mathcal{J}}$ denote the sub-file of $W_i$ stored exclusively in the cache memories of the user set $\mathcal{J}$, the cache memory $Z_k$ of user $k$ after decentralized placement is given by

$$Z_k = \left\{W_{i|\mathcal{J}}: k \in \mathcal{J} \subseteq \{1,..,K\}; i = 1,..,N\right\}$$

(ii) Delivery phase (files combination) : Assuming that user $k$ requests file $W_k$, the server generates and conveys the following codeword simultaneously useful to the subset of users $\mathcal{J}$:

$$V_{\mathcal{J}} = \oplus_{k \in \mathcal{J}} W_{i|\mathcal{J}\backslash k}$$

It has been shown in M. Maddah-Ali and U. Niesen, "Decentralized Coded Caching Attains Order-Optimal Memory-Rate Tradeoff", IEEE/ACM Transactions on Networking, vol. 23, no. 4, pp. 1029-1040, 2015 that in order to satisfy $K$ distinct demands, the total number of transmitted files is given by the following equation:

$$T(m,K) = \frac{1-m}{m}(1 - (1-m)^K).$$

Thus, the global caching gain is equal to $\frac{K}{T(m,K)}$ , which increases with the number of users.

The multicast capacity of the channel at hand, or the common message rate, is given by:

$$R_{mc}(h) = \log\left(1 + \min_{i \in \{1,..,K\}} h_i\right),$$

which decreases with an increasing number of users. The long-term average rate for classical coded caching is given by the following equation:

$$R_{cc} = \frac{K}{T(m,K)} \mathbb{E}[R_{mc}(h)],$$

which is bounded and converges to a constant as *K* grows.

In the following, two schemes implemented in the network entity 101 according to respective embodiments will be described in more detail for the exemplary case of 3 receiver devices 103a-c with communication channel qualities described by the channel statistics $\beta_1 \geq \beta_2 \geq \beta_3$.

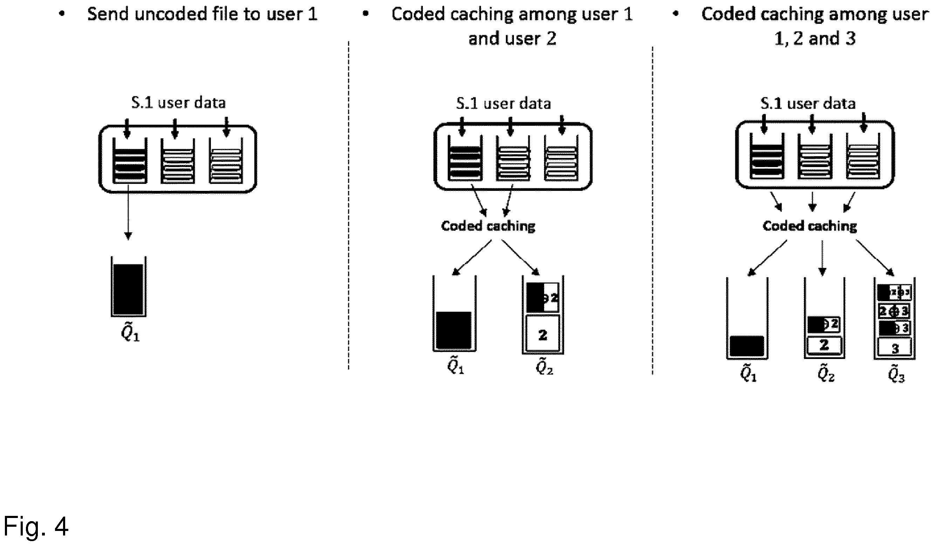

Figure 4 shows a schematic diagram illustrating a first scheduling scheme as implemented in the network entity 101 according to an embodiment.

In the embodiment shown in figure 4, the network entity 101 is configured to restrict the coded caching to be applied only among users {1,2}, {1,2,3} and to unicast the requested file to user {1}. As will be appreciated, when $h_1 \geq \min(h_2, h_3)$, the multicast rate to users {2,3} is the same as to users {1,2,3}. Moreover, the global caching gain increases with the number of users. Thus, in an embodiment, the network entity 101 can be configured to apply coded caching among users {1,2,3} and not among users {2,3}. This also applies in the case, when $h_2 \geq \min(h_1,h_3)$. In this case, the network entity 101 can be configured to choose subset of users {1,2,3} and not the subset {1,3}. As illustrated in figure 4, the network entity 101 (or more specifically its processing unit 101a) can decide about the combination of file segments ({1}, {1,2} or {1,2,3}) and generate codewords, i.e. encoded file segments to be stored in 3 transmission queues $\{\tilde{Q}_i\}_{1 \leq i \leq 3}$, where $\tilde{Q}_i$ contains codewords $V_{\mathcal{J}}$ intended for users in $\mathcal{J} \subseteq \{1,..,i\}$.

Thus, in an embodiment, the processing unit 101a of the network entity 101 is configured to assign the plurality of queues to the plurality of receiver devices 103a-c on the basis of a respective communication channel quality associated with the plurality of receiver devices 103a-c, such as the channel statistics $\beta_1 \geq \beta_2 \geq \beta_3$, wherein the communication channel quality associated with the first receiver device 103a is larger than the communication channel quality associated with the second receiver device 103b.

For any queue $\tilde{Q}_i$ all file segments are useful to the *i*-th user, receiver device 103a-c, a fraction *m* of the file segments is useful to user *j < i* and none is useful to user *j > i*. Let $\tilde{r}_i(t)$ and $r_i(t)$ denote the service rate of queue $Q_i$ and the service rate of user *i* respectively at slot *t*. One then obtains the following relation that does not depend on the combination of file segments:

$$r_i(t) = \tilde{r}_i(t) + m \sum_{j=i+1}^{K} \tilde{r}_j(t) \qquad (1),$$

where $\tilde{r}_j(t) = \min_{k \leq j}\{\log(1 + h_k)\}$. In an embodiment, the scheduler 101b is configured to use a Gradient Descent Scheduling (GDS) scheme for maximizing the following weighted sum rate at each slot *t*:

$$\max \sum_{i=1}^{K} \frac{r_i(t)}{(T_i(t)+d)^\alpha},$$

where $T_i(t)$ is the empirical average rate of user *i* up to slot *t* and *d* is a small constant. Using equation (1), the scheduler 101b using the GDS is configured to maximize the following expression:

$$\max \sum_{i=1}^{K} \left( \frac{1}{(T_i(t)+d)^\alpha} + m \sum_{j=1}^{i-1} \frac{1}{(T_j(t)+d)^\alpha} \right) \tilde{r}_i(t).$$

Under time sharing strategy, the GDS decides to serve the queue $\tilde{Q}_{i^*}$, where

$$i^* = \underset{i}{\mathrm{argmax}} \left\{ \left( \frac{1}{((T_i(t)+d)^\alpha} + m \sum_{j=1}^{i-1} \frac{1}{(T_j(t)+d)^\alpha} \right) \tilde{r}_i(t) \right\}.$$

Thus, in an embodiment, the scheduler 101b is configured to schedule the transmission of the file segments to the plurality of receiver devices 103a-c by determining an index $i^*$ of the queue of the plurality of queues, which is to be used at a time step $t$ for the transmission of the file segments to the plurality of receiver devices 103a-c, on the basis of the following equation:

$$i^* = \underset{i}{\mathrm{argmax}} \left\{ \left( \frac{1}{((T_i(t)+d)^\alpha} + m \sum_{j=1}^{i-1} \frac{1}{(T_j(t)+d)^\alpha} \right) \tilde{r}_i(t) \right\},$$

wherein $\tilde{r}_i(t)$ denotes a service rate of the i-th queue at time step $t$ and is given by:

$$\tilde{r}_i(t) = \min_{k \le i} \{ \log(1 + h_k(t)) \},$$

wherein:

$i$ denotes a queue index,
$d$ denotes a positive constant,
$\alpha$ denotes an exponent associated with a desired fairness level,
$m$ denotes the normalized size of the cache 107a-c of each of the plurality of receiver devices 103a-c,
$T_i(t)$ denotes an accumulated throughput of the i-th queue at time step $t$, and
$h_k(t)$ denotes a channel response of the k-th queue at time step $t$.

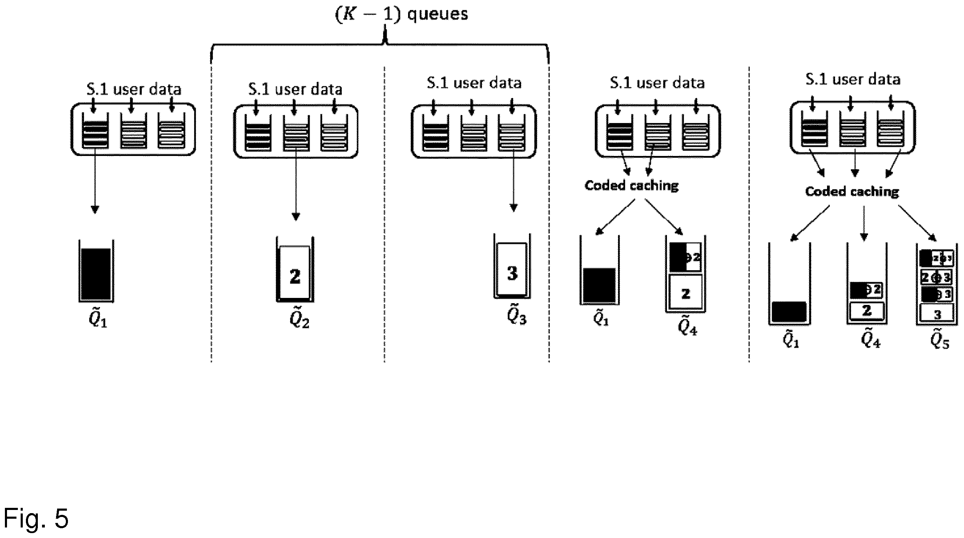

Figure 5 shows a schematic diagram illustrating a further scheduling scheme as implemented in the network entity 101 according to a further embodiment.

This further embodiment makes use of the fact that, when the vanishing multicast rate outweighs the global caching gain, it is better to unicast the file segments to their destination without any combination, which correspond to unicast opportunistic scheduling. Thus, in the embodiment shown in figure 5, $K - 1$ transmission queues are added to the embodiment shown in figure 4. As will be appreciated, in further embodiments 1, 2, ..., or $K - 2$ transmission queues can be added to the embodiment shown in figure 4.

For the embodiment shown in figure 5 the following relation holds:

$$r_i(t) = \begin{cases} \tilde{r}_1(t) + m \displaystyle\sum_{j=K+1}^{2K-1} \tilde{r}_j(t) & for \quad i = 1 \\ \tilde{r}_i(t) + m \displaystyle\sum_{j=K+i}^{2K-1} \tilde{r}_j(t) + \tilde{r}_{K+i-1}(t) & for \quad i \ge 2 \end{cases} \tag{2}$$

On the basis of equation (2) the scheduler 101b of the network entity 101 can maximize the following relation using a GDS scheme:

$$\max \sum_{i=1}^{K} \frac{\tilde{r}_i(t)}{(T_i(t)+d)^\alpha} + \sum_{i=K+1}^{2K-1} \left( \frac{1}{(T_{i-K+1}(t)+d)^\alpha} + m \sum_{j=1}^{i-K} \frac{1}{(T_j(t)+d)^\alpha} \right) \tilde{r}_i(t).$$

Under time sharing strategy, the scheduler 101b using the GDS can decide to serve the queue $\tilde{Q}_{i^*}$, defined by the following relation:

$$i^* = \underset{1 \le i \le 2K-1}{\mathrm{argmax}} \left\{ \max_{1 \le i \le K} \frac{\tilde{r}_i(t)}{(T_i(t)+d)^\alpha} ; \max_{K+1 \le i \le 2K-1} \left( \frac{1}{(T_{i-K+1}(t)+d)^\alpha} + m \sum_{j=1}^{i-K} \frac{1}{(T_j(t)+d)^\alpha} \right) \tilde{r}_i(t) \right\}$$

It is to be noted that a conventional unicast opportunistic scheduling scheme considers only the first *K* queues and serves the queue $\tilde{Q}_{i^*}$ where $i^* = \operatorname*{argmax}_{1 \le i \le K} \left\{ \frac{\tilde{r}_i(t)}{(T_i(t)+d)^\alpha} \right\}$ . Thus, the embodiment shown in figure 5 can be considered to make beneficial use of the maximum between the embodiment shown in figure 4 and the conventional unicast opportunistic scheme with the number of queues still scaling linearly with the number of receiver devices in the system.

Thus, in an embodiment, the scheduler 101b of the network entity 101 is configured to schedule the transmission of the file segments to the plurality of receiver devices 103a-c by determining an index *i\** of the queue of the plurality of queues, which is to be used at a time step *t* for the transmission of the file segments to the plurality of receiver devices 103a-c, on the basis of the following equation:

$$i^* = \operatorname*{argmax}_{1 \le i \le 2K-1} \left\{ \max_{1 \le i \le K} \frac{\tilde{r}_i(t)}{(T_i(t)+d)^\alpha} ; \max_{K+1 \le i \le 2K-1} \left( \frac{1}{(T_{i-K+1}(t)+d)^\alpha} + m \sum_{j=1}^{i-K} \frac{1}{(T_j(t)+d)^\alpha} \right) \tilde{r}_i(t) \right\}$$

wherein $\tilde{r}_i(t)$ denotes a service rate of the i-th queue at time step *t* and is given by:

$$\tilde{r}_i(t) = \min_{k \le i} \{ \log(1 + h_k(t)) \},$$

wherein:

   *i* denotes a queue index,
   *d* denotes a positive constant,
   $\alpha$ denotes an exponent associated with a desired fairness level,
   *m* denotes the normalized size of the cache 107a-c of each of the plurality of receiver devices 103a-c,
   $T_i(t)$ denotes an accumulated throughput of the i-th queue at time step *t,* and
   $h_k(t)$ denotes a channel response of the k-th queue at time step *t.*

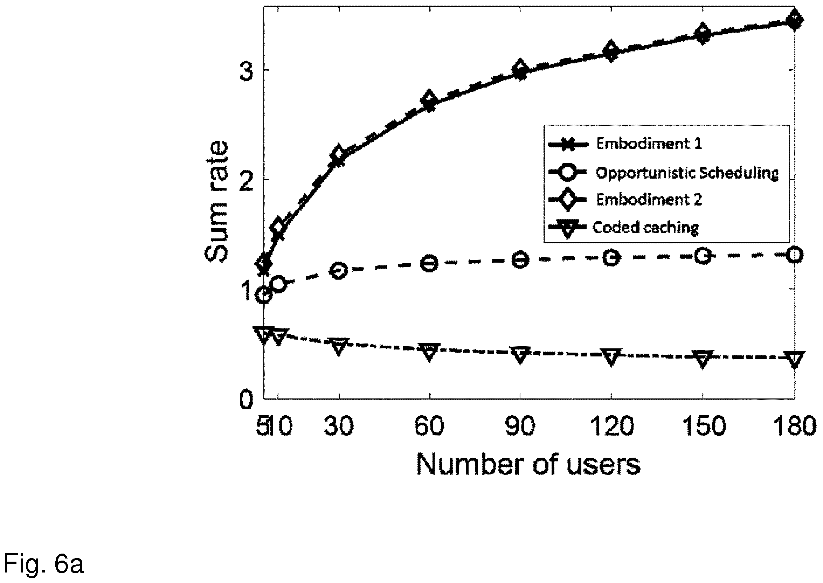

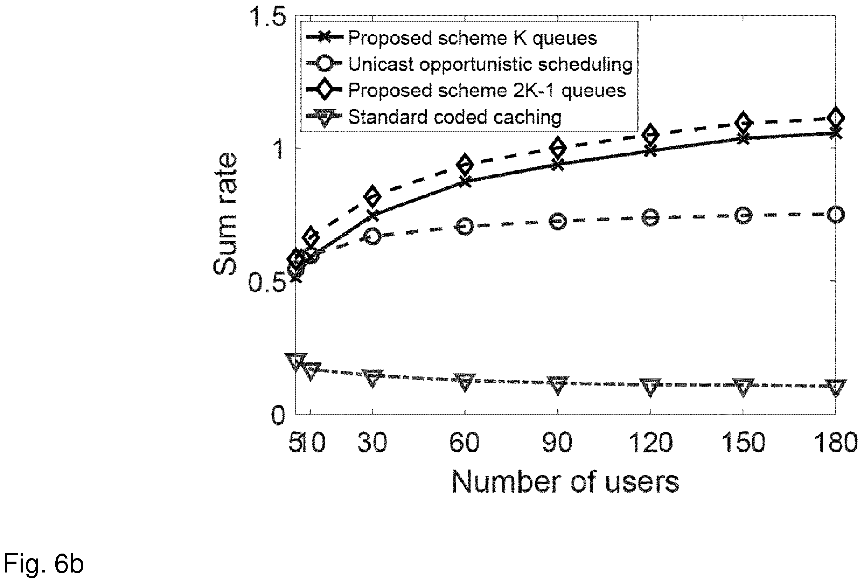

Figures 6a and 6b shows graphs illustrating the performance in terms of the sum rate versus the number of users of embodiments of the invention in comparison to conventional coded caching and the conventional unicast opportunistic scheme. As can be taken from figures 6a and 6b, the sum rate of the conventional coded caching scheme decreases with the number of users, whereas it increases for the other schemes. In fact, the classical coded caching scheme applies coded caching for all users and transmits codewords, i.e. encoded file segments according to the worst channel quality. The other schemes opportunistically use the channel state to maximize the utility. As can be taken from figure 6a, form = 0.6 embodiments of the invention outperform the conventional schemes. The embodiment shown in figure 5 outperforms all the other schemes even when the cache size is small (as depicted in figure 6b for m = 0.3), since the GDS implemented in the scheduler 101b of embodiment 2 takes the maximum between the embodiment shown in figure 4 and the conventional unicast opportunistic scheme.

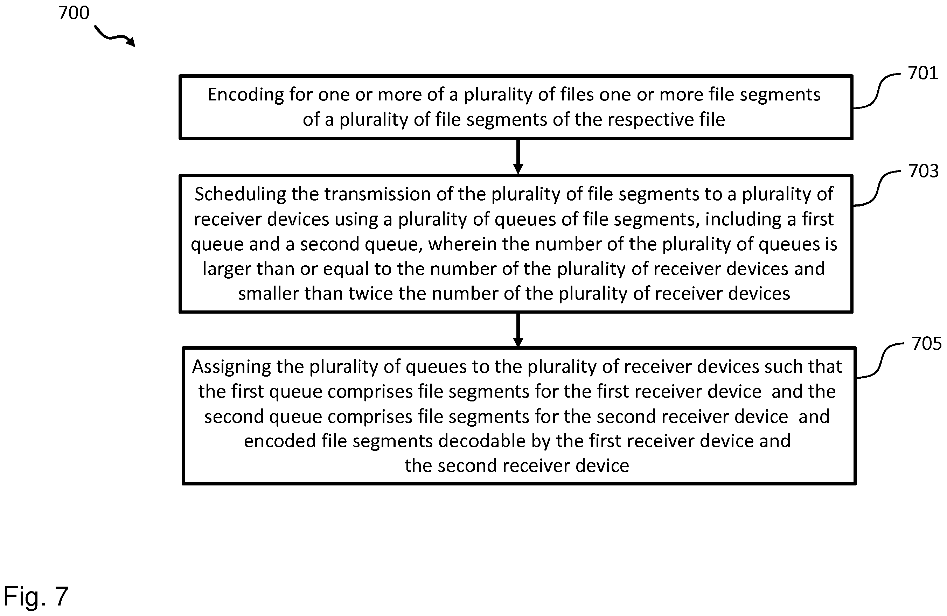

Figure 7 shows a schematic diagram illustrating a corresponding method 700 of distributing a plurality of files to the plurality of receiver devices 103a-c according to an embodiment.

The method 700 comprises the following steps. A first step 701 of encoding for one or more of the plurality of files one or more file segments of the plurality of file segments of the respective file. A second step 703 of scheduling the transmission of the plurality of file segments to the plurality of receiver devices 103a-c using a plurality of queues of file segments, including a first queue and a second queue, wherein the number of the plurality of queues is larger than or equal to the number of the plurality of receiver devices 103a-c and smaller than twice the number of the plurality of receiver devices 103a-c. A third step 705 of assigning the plurality of queues to the plurality of receiver devices 103a-c such that the first queue comprises file segments for the first receiver device 103a and the second queue comprises file segments for the second receiver device 103b and encoded file segments decodable by the first receiver device 103a and the second receiver device 103b. As noted above, the the plurality of queues are assigned to the plurality of receiver devices on the basis of a respective communication channel quality associated with the plurality of receiver devices, wherein the communication channel quality associated with the first receiver device is larger than the communication channel quality associated with the second receiver device.

While a particular feature or aspect of the disclosure may have been disclosed with respect to only one of several implementations or embodiments, such a feature or aspect may be combined with one or more further features or aspects of the other implementations or embodiments as may be desired or advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives thereof may have been used. It should be understood that these terms may have been used to indicate that two elements cooperate or interact with each other regardless whether they are in direct physical or electrical contact, or they are not in direct contact with each other.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

**Claims**

1. A network entity (101) configured to distribute a plurality of files to a plurality of receiver devices (103a-c), including a first receiver device (103a) and a second receiver device (103b), wherein each of the plurality of files can be segmented into a plurality of file segments and each of the plurality of receiver devices (103a-c) comprises a cache (107a-c) for caching one or more of the plurality of file segments, wherein the network entity (101) comprises:

   a processing unit (101a) configured to encode for one or more of the plurality of files one or more file segments of the plurality of file segments of the respective file; and
   a scheduler (101b) configured to schedule the transmission of the plurality of file segments to the plurality of receiver devices (103a-c) using a plurality of queues of file segments, including a first queue and a second queue, wherein the number of the plurality of queues is larger than or equal to the number of the plurality of receiver devices (103a-c) and smaller than twice the number of the plurality of receiver devices (103a-c), and wherein the scheduler (101b) is further configured to assign the plurality of queues to the plurality of receiver devices (103a-c) such that the first queue comprises file segments for the first receiver device (103a) and the second queue comprises file segments for the second receiver device (103b) and encoded file segments decodable by the first receiver device (103a) and the second receiver device (103b),
   **characterized in that**
   the processing unit (101a) is configured to assign the plurality of queues to the plurality of receiver devices (103a-c) on the basis of a respective communication channel quality associated with the plurality of receiver devices (103a-c), wherein the communication channel quality associated with the first receiver device (103a) is larger than the communication channel quality associated with the second receiver device (103b).

2. The network entity (101) of claim 1, wherein the processing unit (101a) is configured to assign the plurality of queues to the plurality of receiver devices (103a-c) on the basis of the respective communication channel quality associated with each of the plurality of receiver devices (103a-c) and a respective priority associated with each of the plurality of receiver devices (103a-c).

3. The network entity (101) of any one of the preceding claims, wherein the scheduler (101b) is configured to periodically reassign the plurality of queues to the plurality of receiver devices (103a-c).

4. The network entity (101) of any one of the preceding claims, wherein the plurality of receiver devices (103a-c) comprise a third receiver device (103c) and the plurality of queues comprise a third queue and wherein the scheduler (101b) is further configured to assign the plurality of queues to the plurality of receiver devices (103a-c) such that the third queue comprises file segments for the third receiver device (103c), encoded file segments decodable by the first receiver device (103a) and the third receiver device (103c), encoded file segments decodable by the second receiver device (103b) and the third receiver device (103c) and encoded file segments decodable by the first receiver device (103a), the second receiver device (103b) and the third receiver device (103c).

5. The network entity (101) of any one of the preceding claims, wherein the scheduler (101b) is configured to schedule the transmission of the file segments to the plurality of receiver devices using the plurality of queues of file segments on the basis of a scheduling plan.

6. The network entity (101) of claim 5, wherein the scheduler (101b) is configured to schedule the transmission of the file segments to the plurality of receiver devices (103a-c) based on a gradient descent scheduling, GDS, scheme.

7. The network entity (101) of claim 5 or 6, wherein the scheduler (101b) is configured to schedule the transmission of the file segments to the plurality of receiver devices (103a-c) by determining an index $i^*$ of the queue of the plurality of queues, which is to be used at a time step t for the transmission of the file segments to the plurality of receiver devices (1033-c), on the basis of the following equation:

$$i^* = \operatorname*{argmax}_{i}\left\{\left(\frac{1}{(T_i(t)+d)^\alpha} + m\sum_{j=1}^{i-1}\frac{1}{(T_j(t)+d)^\alpha}\right)\tilde{r}_i(t)\right\},$$

wherein $\tilde{r}_i(t)$ denotes a service rate of the i-th queue at time step *t* and is given by:

$$\tilde{r}_i(t) = \min_{k \le i}\{\log(1 + h_k(t))\},$$

wherein:
*i* denotes a queue index,
*d* denotes a positive constant,
$\alpha$ denotes an exponent associated with a desired fairness level,
*m* denotes the normalized size of the cache (107a-c) of each of the plurality of receiver devices (103a-c),
$T_i(t)$ denotes an accumulated throughput of the i-th queue at time step *t,* and
$h_k(t)$ denotes a channel response of the k-th queue at time step *t.*

8.  The network entity (101) of claim 4, wherein the plurality of queues comprise a fourth queue and wherein the scheduler (101b) is further configured to assign the plurality of queues to the plurality of receiver devices (103a-c) such that the fourth queue comprises file segments for the second receiver device (103b).

9.  The network entity (101) of claim 8, wherein the scheduler (101b) is configured to schedule the transmission of the file segments to the plurality of receiver devices (103a-c) by determining an index *i** of the queue of the plurality of queues, which is to be used at a time step *t* for the transmission of the file segments to the plurality of receiver devices (103a-c), on the basis of the following equation:

$$i^* = \operatorname*{argmax}_{1 \le i \le 2K-1}\left\{\max_{1 \le i \le K}\frac{\tilde{r}_i(t)}{(T_i(t)+d)^\alpha}; \max_{K+1 \le i \le 2K-1}\left(\frac{1}{(T_{i-K+1}(t)+d)^\alpha} + m\sum_{j=1}^{i-K}\frac{1}{(T_j(t)+d)^\alpha}\right)\tilde{r}_i(t)\right\}$$

wherein $\tilde{r}_1(t)$ denotes a service rate of the i-th queue at time step *t* and is given by:

$$\tilde{r}_i(t) = \min_{k \le i}\{\log(1 + h_k(t))\},$$

wherein:
*i* denotes a queue index,
*d* denotes a positive constant,
$\alpha$ denotes an exponent associated with a desired fairness level,
*m* denotes the normalized size of the cache (107a-c) of each of the plurality of receiver devices (103a-c),
$T_i(t)$ denotes an accumulated throughput of the i-th queue at time step *t,* and
$h_k(t)$ denotes a channel response of the k-th queue at time step *t.*

10. The network entity (101) of any one of the preceding claims, wherein the processing unit (101a) is configured to encode the one or more file segments of the plurality of file segments of the respective file of the one or more of the plurality of files using an XOR operation.

11. The network entity (101) of any one of the preceding claims, wherein the network entity (101) is a base station (101) and the plurality of receiver devices (103a-c) are a plurality of user equipments (103a-c).

12. The network entity (101) of any one of the preceding claims, wherein the network entity (101) is a macro base station and the plurality of receiver devices (103a-c) are a plurality of small cell base stations.

13. A method (700) for distributing a plurality of files to a plurality of receiver devices (103a-c), including a first receiver device (103a) and a second receiver device (103b), wherein each of the plurality of files can be segmented into a plurality of file segments and each of the plurality of receiver devices (103a-c) comprises a cache (107a-c) for caching one or more of the plurality of file segments, wherein the method (700) comprises:

encoding (701) for one or more of the plurality of files one or more file segments of the plurality of file segments of the respective file;

scheduling (703) the transmission of the plurality of file segments to the plurality of receiver devices (103a-c) using a plurality of queues of file segments, including a first queue and a second queue, wherein the number of the plurality of queues is larger than or equal to the number of the plurality of receiver devices (103a-c) and smaller than twice the number of the plurality of receiver devices (103a-c); and

assigning (705) the plurality of queues to the plurality of receiver devices (103a-c) such that the first queue comprises file segments for the first receiver device (103a) and the second queue comprises file segments for the second receiver device (103b) and encoded file segments decodable by the first receiver device (103a) and the second receiver device (103b).

**characterized in that** the method further comprises:

assigning the plurality of queues to the plurality of receiver devices (103a-c) on the basis of a respective communication channel quality associated with the plurality of receiver devices (103a-c), wherein the communication channel quality associated with the first receiver device (103a) is larger than the communication channel quality associated with the second receiver device (103b).

14. A computer program product comprising program code for performing the method (700) of claim 13, when executed on a computer or a processor.

**Patentansprüche**

1. Netzwerkentität (101), die dazu konfiguriert ist, eine Mehrzahl von Dateien an eine Mehrzahl von Empfängervorrichtungen (103a-c), einschließlich einer ersten Empfängervorrichtung (103a) und einer zweiten Empfängervorrichtung (103b), zu verteilen, wobei jede der Mehrzahl von Dateien in eine Mehrzahl von Dateisegmenten segmentiert werden kann und jede der Mehrzahl von Empfängervorrichtungen (103a-c) einen Cache (107a-c) zum Zwischenspeichern eines oder mehrerer der Mehrzahl von Dateisegmenten umfasst, wobei die Netzwerkentität (101) Folgendes umfasst:

eine Verarbeitungseinheit (101a), die dazu konfiguriert ist, für eine oder mehrere der Mehrzahl von Dateien ein oder mehrere Dateisegmente der Mehrzahl von Dateisegmenten der jeweiligen Datei zu codieren; und

eine Planungsvorrichtung (101b), die dazu konfiguriert ist, die Übertragung der Mehrzahl von Dateisegmenten an die Mehrzahl von Empfängervorrichtungen (103a-c) unter Verwendung einer Mehrzahl von Warteschlangen von Dateisegmenten, einschließlich einer ersten Warteschlange und einer zweiten Warteschlange, zu planen, wobei die Anzahl der Mehrzahl von Warteschlangen größer als oder gleich der Anzahl der Mehrzahl von Empfängervorrichtungen (103a-c) und kleiner als das Doppelte der Anzahl der Mehrzahl von Empfängervorrichtungen (103a-c) ist, und wobei die Planungsvorrichtung (101b) ferner dazu konfiguriert ist, die Mehrzahl von Warteschlangen der Mehrzahl von Empfängervorrichtungen (103a-c) derart zuzuweisen, dass die erste Warteschlange Dateisegmente für die erste Empfängervorrichtung (103a) umfasst und die zweite Warteschlange Dateisegmente für die zweite Empfängervorrichtung (103b) und codierte Dateisegmente, die durch die erste Empfängervorrichtung (103a) und die zweite Empfängervorrichtung (103b) decodierbar sind, umfasst,

**dadurch gekennzeichnet, dass**

die Verarbeitungseinheit (101a) dazu konfiguriert ist, die Mehrzahl von Warteschlangen der Mehrzahl von Empfängervorrichtungen (103a-c) auf der Basis einer jeweiligen mit der Mehrzahl von Empfängervorrichtungen (103a-c) assoziierten Kommunikationskanalqualität zuzuweisen, wobei die mit der ersten Empfängervorrichtung (103a) assoziierte Kommunikationskanalqualität größer ist als die mit der zweiten Empfängervorrichtung (103b) assoziierte Kommunikationskanalqualität.

2. Netzwerkentität (101) nach Anspruch 1, wobei die Verarbeitungseinheit (101a) dazu konfiguriert ist, die Mehrzahl von Warteschlangen der Mehrzahl von Empfängervorrichtungen (103a-c) auf der Basis der jeweiligen mit jeder der Mehrzahl von Empfängervorrichtungen (103a-c) assoziierten Kommunikationskanalqualität und einer jeweiligen mit jeder der Mehrzahl von Empfängervorrichtungen (103a-c) assoziierten Priorität zuzuweisen.

3. Netzwerkentität (101) nach einem der vorhergehenden Ansprüche, wobei die Planungsvorrichtung (101b) dazu konfiguriert ist, die Mehrzahl von Warteschlangen der Mehrzahl von Empfängervorrichtungen (103a-c) periodisch neu zuzuweisen.

4. Netzwerkentität (101) nach einem der vorhergehenden Ansprüche, wobei die Mehrzahl von Empfängervorrichtungen (103a-c) eine dritte Empfängervorrichtung (103c) umfasst und die Mehrzahl von Warteschlangen eine dritte Warteschlange umfasst und wobei die Planungsvorrichtung (101b) ferner dazu konfiguriert ist, die Mehrzahl von Warteschlangen der Mehrzahl von Empfängervorrichtungen (103a-c) derart zuzuweisen, dass die dritte Warteschlange Dateisegmente für die dritte Empfängervorrichtung (103c), codierte Dateisegmente, die durch die erste Empfängervorrichtung (103a) und die dritte Empfängervorrichtung (103c) decodierbar sind, codierte Dateisegmente, die durch die zweite Empfängervorrichtung (103b) und die dritte Empfängervorrichtung (103c) decodierbar sind, und codierte Dateisegmente, die durch die erste Empfängervorrichtung (103a), die zweite Empfängervorrichtung (103b) und die dritte Empfängervorrichtung (103c) decodierbar sind, umfasst.

5. Netzwerkentität (101) nach einem der vorhergehenden Ansprüche, wobei die Planungsvorrichtung (101b) dazu konfiguriert ist, die Übertragung der Dateisegmente an die Mehrzahl von Empfängervorrichtungen unter Verwendung der Mehrzahl von Warteschlangen von Dateisegmenten auf der Basis eines Planungsplans zu planen.

6. Netzwerkentität (101) nach Anspruch 5, wobei die Planungsvorrichtung (101b) dazu konfiguriert ist, die Übertragung der Dateisegmente an die Mehrzahl von Empfängervorrichtungen (103a-c) basierend auf einem Gradientenabstiegsplanungs-, GDS, Schema zu planen.

7. Netzwerkentität (101) nach Anspruch 5 oder 6, wobei die Planungsvorrichtung (101b) dazu konfiguriert ist, die Übertragung der Dateisegmente an die Mehrzahl von Empfängervorrichtungen (103a-c) durch Bestimmen eines Index $i^*$ der Warteschlange der Mehrzahl von Warteschlangen, die an einem Zeitschritt $t$ zur Übertragung der Dateisegmente an die Mehrzahl von Empfängervorrichtungen (103a-c) verwendet werden soll, auf der Basis der folgenden Gleichung zu planen:

$$i^* = \underset{i}{argmax}\left\{\left(\frac{1}{(T_i(t) + d)^\alpha} + m\sum_{j=1}^{i-1}\frac{1}{(T_j(t) + d)^\alpha}\right)\tilde{r}_i(t)\right\},$$

wobei $\tilde{r}_i(t)$ eine Dienstrate der i-ten Warteschlange an Zeitschritt $t$ bezeichnet und gegeben ist durch:

$$\tilde{r}_i(t) = \min_{k \leq i}\{\log(1 + h_k(t))\},$$

wobei:
$i$ einen Warteschlangenindex bezeichnet,
$d$ eine positive Konstante bezeichnet,
$\alpha$ einen Exponenten bezeichnet, der mit einer gewünschten Fairnessstufe assoziiert ist, $m$ die normalisierte Größe des Cache (107a-c) jeder der Mehrzahl von Empfängervorrichtungen (103a-c) bezeichnet,
$T_i(t)$ einen akkumulierten Durchsatz der i-ten Warteschlange an Zeitschritt $t$ bezeichnet, und
$h_k(t)$ eine Kanalantwort der k-ten Warteschlange an Zeitschritt $t$ bezeichnet.

8. Netzwerkentität (101) nach Anspruch 4, wobei die Mehrzahl von Warteschlangen eine vierte Warteschlange umfasst und wobei die Planungsvorrichtung (101b) ferner dazu konfiguriert ist, die Mehrzahl von Warteschlangen der Mehrzahl von Empfängervorrichtungen (103a-c) derart zuzuweisen, dass die vierte Warteschlange Dateisegmente für die zweite Empfängervorrichtung (103b) umfasst.

9. Netzwerkentität (101) nach Anspruch 8, wobei die Planungsvorrichtung (101b) dazu konfiguriert ist, die Übertragung der Dateisegmente an die Mehrzahl von Empfängervorrichtungen (103a-c) durch Bestimmen eines Index $i^*$ der Warteschlange der Mehrzahl von Warteschlangen, die an einem Zeitschritt $t$ zur Übertragung der Dateisegmente an die Mehrzahl von Empfängervorrichtungen (103a-c) verwendet werden soll, auf der Basis der folgenden Gleichung zu planen:

$$i^* = \underset{1 \leq i \leq 2K-i}{argmax} \left\{ \max_{1 \leq i \leq K} \frac{\tilde{r}_i(t)}{(T_i(t) + d)^\alpha}; \max_{K+1 \leq i \leq 2K-1} \left( \frac{1}{(T_{i-K+1}(t) + d)^\alpha} + m \sum_{j=1}^{i-K} \frac{1}{(T_j(t) + d)^\alpha} \right) \tilde{r}_i(t) \right\}$$

wobei $\tilde{r}_i(t)$ eine Dienstrate der i-ten Warteschlange an Zeitschritt *t* bezeichnet und gegeben ist durch:

$$\tilde{r}_i(t) = \min_{k \leq i} \{ \log (1 + h_k(t)) \},$$

wobei:

*i* einen Warteschlangenindex bezeichnet,

*d* eine positive Konstante bezeichnet,

$\alpha$ einen Exponenten bezeichnet, der mit einer gewünschten Fairnessstufe assoziiert ist, *m* die normalisierte Größe des Cache (107a-c) jeder der Mehrzahl von Empfängervorrichtungen (103a-c) bezeichnet,

$T_i(t)$ einen akkumulierten Durchsatz der i-ten Warteschlange an Zeitschritt *t* bezeichnet, und

$h_k(t)$ eine Kanalantwort der k-ten Warteschlange an Zeitschritt *t* bezeichnet.

10. Netzwerkentität (101) nach einem der vorhergehenden Ansprüche, wobei die Verarbeitungseinheit (101a) dazu konfiguriert ist, das eine oder die mehreren Dateisegmente der Mehrzahl von Dateisegmenten der jeweiligen Datei der einen oder mehreren der Mehrzahl von Dateien unter Verwendung einer XOR-Operation zu codieren.

11. Netzwerkentität (101) nach einem der vorhergehenden Ansprüche, wobei die Netzwerkentität (101) eine Basisstation (101) ist und die Mehrzahl von Empfängervorrichtungen (103a-c) eine Mehrzahl von Benutzereinrichtungen (103a-c) sind.

12. Netzwerkentität (101) nach einem der vorhergehenden Ansprüche, wobei die Netzwerkentität (101) eine Makrobasisstation ist und die Mehrzahl von Empfängervorrichtungen (103a-c) eine Mehrzahl von Kleinzellen-Basisstationen sind.

13. Verfahren (700) zum Verteilen einer Mehrzahl von Dateien an eine Mehrzahl von Empfängervorrichtungen (103a-c), einschließlich einer ersten Empfängervorrichtung (103a) und einer zweiten Empfängervorrichtung (103b), wobei jede der Mehrzahl von Dateien in eine Mehrzahl von Dateisegmenten segmentiert werden kann und jede der Mehrzahl von Empfängervorrichtungen (103a-c) einen Cache (107a-c) zum Zwischenspeichern eines oder mehrerer der Mehrzahl von Dateisegmenten umfasst, wobei das Verfahren (700) Folgendes umfasst:

Codieren (701), für eine oder mehrere der Mehrzahl von Dateien, eines oder mehrerer Dateisegmente der Mehrzahl von Dateisegmenten der jeweiligen Datei;

Planen (703) der Übertragung der Mehrzahl von Dateisegmenten an die Mehrzahl von Empfängervorrichtungen (103a-c) unter Verwendung einer Mehrzahl von Warteschlangen von Dateisegmenten, einschließlich einer ersten Warteschlange und einer zweiten Warteschlange, wobei die Anzahl der Mehrzahl von Warteschlangen größer als oder gleich der Anzahl der Mehrzahl von Empfängervorrichtungen (103a-c) und kleiner als das Doppelte der Anzahl der Mehrzahl von Empfängervorrichtungen (103a-c) ist; und

Zuweisen (705) der Mehrzahl von Warteschlangen zu der Mehrzahl von Empfängervorrichtungen (103a-c) derart, dass die erste Warteschlange Dateisegmente für die erste Empfängervorrichtung (103a) umfasst und die zweite Warteschlange Dateisegmente für die zweite Empfängervorrichtung (103b) und codierte Dateisegmente, die durch die erste Empfängervorrichtung (103a) und die zweite Empfängervorrichtung (103b) decodierbar sind, umfasst,

**dadurch gekennzeichnet, dass** das Verfahren ferner Folgendes umfasst:

Zuweisen der Mehrzahl von Warteschlangen zu der Mehrzahl von Empfängervorrichtungen (103a-c) auf der Basis einer jeweiligen mit der Mehrzahl von Empfängervorrichtungen (103a-c) assoziierten Kommunikationskanalqualität, wobei die mit der ersten Empfängervorrichtung (103a) assoziierte Kommunikationskanalqualität größer ist als die mit der zweiten Empfängervorrichtung (103b) assoziierte Kommunikationskanalqualität.

14. Computerprogrammprodukt, umfassend Programmcode zum Durchführen des Verfahrens (700) nach Anspruch 13 bei Ausführen auf einem Computer oder einem Prozessor.

**Revendications**

1. Entité de réseau (101) configurée pour distribuer une pluralité de fichiers à une pluralité de dispositifs récepteurs (103a-c), comportant un premier dispositif récepteur (103a) et un deuxième dispositif récepteur (103b), dans laquelle chacun de la pluralité de fichiers peut être segmenté en une pluralité de segments de fichier et chacun de la pluralité de dispositifs récepteurs (103a-c) comprend un cache (107a-c) pour la mise en cache d'un ou plusieurs de la pluralité de segments de fichier, l'entité de réseau (101) comprenant :

   une unité de traitement (101a) configurée pour coder pour un ou plusieurs de la pluralité de fichiers un ou plusieurs segments de fichier de la pluralité de segments de fichier du fichier respectif ; et
   un ordonnanceur (101b) configuré pour ordonnancer la transmission de la pluralité de segments de fichier à la pluralité de dispositifs récepteurs (103a-c) en utilisant une pluralité de files d'attente de segments de fichier, comportant une première file d'attente et une deuxième file d'attente, dans laquelle le nombre de la pluralité de files d'attente est supérieur ou égal au nombre de la pluralité de dispositifs récepteurs (103a-c) et inférieur à deux fois le nombre de la pluralité de dispositifs récepteurs (103a-c), et dans laquelle l'ordonnanceur (101b) est configuré en outre pour assigner la pluralité de files d'attente à la pluralité de dispositifs récepteurs (103a-c) de telle sorte que la première file d'attente comprenne des segments de fichier pour le premier dispositif récepteur (103a) et la deuxième file d'attente comprenne des segments de fichier pour le deuxième dispositif récepteur (103b) et des segments de fichier codés décodables par le premier dispositif récepteur (103a) et le deuxième dispositif récepteur (103b),
   **caractérisée en ce que**
   l'unité de traitement (101a) est configurée pour assigner la pluralité de files d'attente à la pluralité de dispositifs récepteurs (103a-c) en fonction d'une qualité de canal de communication respective associée à la pluralité de dispositifs récepteurs (103a-c), dans laquelle la qualité de canal de communication associée au premier dispositif récepteur (103a) est supérieure à la qualité de canal de communication associée au deuxième dispositif récepteur (103b).

2. Entité de réseau (101) selon la revendication 1, dans laquelle l'unité de traitement (101a) est configurée pour assigner la pluralité de files d'attente à la pluralité de dispositifs récepteurs (103a-c) en fonction de la qualité de canal de communication respective associée à chacun de la pluralité de dispositifs récepteurs (103a-c) et d'une priorité respective associée à chacun de la pluralité de dispositifs récepteurs (103a-c).

3. Entité de réseau (101) selon l'une quelconque des revendications précédentes, dans laquelle l'ordonnanceur (101b) est configuré pour réassigner périodiquement la pluralité de files d'attente à la pluralité de dispositifs récepteurs (103a-c).

4. Entité de réseau (101) selon l'une quelconque des revendications précédentes, dans laquelle la pluralité de dispositifs récepteurs (103a-c) comprend un troisième dispositif récepteur (103c) et la pluralité de files d'attente comprend une troisième file d'attente et dans laquelle l'ordonnanceur (101b) est configuré en outre pour assigner la pluralité de files d'attente à la pluralité de dispositifs récepteurs (103a-c) de telle sorte que la troisième file d'attente comprenne des segments de fichier pour le troisième dispositif récepteur (103c), des segments de fichier codés décodables par le premier dispositif récepteur (103a) et le troisième dispositif récepteur (103c), des segments de fichier codés décodables par le deuxième dispositif récepteur (103b) et le troisième dispositif récepteur (103c) et des segments de fichier codés décodables par le premier dispositif récepteur (103a), le deuxième dispositif récepteur (103b) et le troisième dispositif récepteur (103c).

5. Entité de réseau (101) selon l'une quelconque des revendications précédentes, dans laquelle l'ordonnanceur (101b) est configuré pour ordonnancer la transmission des segments de fichier à la pluralité de dispositifs récepteurs en utilisant la pluralité de files d'attente de segments de fichier en fonction d'un plan d'ordonnancement.

6. Entité de réseau (101) selon la revendication 5, dans laquelle l'ordonnanceur (101b) est configuré pour ordonnancer la transmission des segments de fichier à la pluralité de dispositifs récepteurs (103a-c) conformément à un plan d'ordonnancement à descente de gradient, GDS.

7. Entité de réseau (101) selon la revendication 5 ou 6, dans laquelle l'ordonnanceur (101b) est configuré pour ordonnancer la transmission des segments de fichier à la pluralité de dispositifs récepteurs (103a-c) en déterminant un indice i* de la file d'attente de la pluralité de files d'attente, qui doit être utilisée à un pas dans le temps t pour la transmission des segments de fichier à la pluralité de dispositifs récepteurs (103a-c), conformément à l'équation

suivante :

$$i^* = \underset{i}{arg\,max}\left\{\left(\frac{1}{(T_i(t)+d)^\alpha} + m\sum\nolimits_{j=1}^{i-1}\frac{1}{(T_i(t)+d)^\alpha}\right)\tilde{r}_i(\right.$$

dans laquelle $\tilde{r}_i(t)$ désigne un taux de service de la i-ème file d'attente au pas dans le temps $t$ et est donné par :

$$\tilde{r}_i(t) = \min_{k\leq i}\{\log(1 + h_k(t))\},$$

dans laquelle :
$i$ désigne un indice de file d'attente,
$d$ désigne une constante positive,
$\alpha$ désigne un exposant associé à un niveau d'équité souhaité,
$m$ désigne la taille normalisée du cache (107a-c) de chacun de la pluralité de dispositifs récepteurs (103a-c),
$T_i(t)$ désigne un rendement cumulé de la i-ème file d'attente au pas dans le temps $t$, et $h_k(t)$ désigne une réponse de canal de la k-ième file d'attente au pas dans le temps $t$.

8. Entité de réseau (101) selon la revendication 4, dans laquelle la pluralité de files d'attente comprend une quatrième file d'attente et dans laquelle l'ordonnanceur (101b) est configuré en outre pour assigner la pluralité de files d'attente à la pluralité de dispositifs récepteurs (103a-c) de telle sorte que la quatrième file d'attente comprenne des segments de fichier pour le deuxième dispositif récepteur (103b).

9. Entité de réseau (101) selon la revendication 8, dans laquelle l'ordonnanceur (101b) est configuré pour ordonnancer la transmission des segments de fichier à la pluralité de dispositifs récepteurs (103a-c) en déterminant un indice $i^*$ de la file d'attente de la pluralité de files d'attente, qui doit être utilisée à un pas dans le temps $t$ pour la transmission des segments de fichier à la pluralité de dispositifs récepteurs (103a-c), conformément à l'équation suivante :

$$i^* = \underset{1\leq i\leq 2K-1}{argmax}\left\{\max_{1\leq i\leq K}\frac{\tilde{r}_i(t)}{(T_i(t)+d)^\alpha}; \max_{K+1\leq i\leq 2K-1}\left(\frac{1}{(T_{i-K+1}(t)+d)^\alpha} + m\sum\nolimits_{j=1}^{i-K}\frac{1}{(T_j(t)+d)^\alpha}\right)\tilde{r}_i(t)\right\}$$

dans laquelle $\tilde{r}_i(t)$ désigne un taux de service de la i-ème file d'attente au pas dans le temps $t$ et est donné par :

$$\tilde{r}_i(t) = \min_{k\leq i}\{\log(1 + h_k(t))\},$$

dans laquelle :
$i$ désigne un indice de file d'attente,
$d$ désigne une constante positive,
$\alpha$ désigne un exposant associé à un niveau d'équité souhaité,
$m$ désigne la taille normalisée du cache (107a-c) de chacun de la pluralité de dispositifs récepteurs (103a-c),
$T_i(t)$ désigne un rendement cumulé de la i-ème file d'attente au pas dans le temps $t$, et $h_k(t)$ désigne une réponse de canal de la k-ième file d'attente au pas dans le temps $t$.

10. Entité de réseau (101) selon l'une quelconque des revendications précédentes, dans laquelle l'unité de traitement (101a) est configurée pour coder les un ou plusieurs segments de fichier de la pluralité de segments de fichier du fichier respectif des un ou plusieurs de la pluralité de fichiers à l'aide d'une opération OU EXCLUSIF.

11. Entité de réseau (101) selon l'une quelconque des revendications précédentes, l'entité de réseau (101) étant une station de base (101) et la pluralité de dispositifs récepteurs (103a-c) étant une pluralité d'équipements utilisateurs (103a-c).

**12.** Entité de réseau (101) selon l'une quelconque des revendications précédentes, l'entité de réseau (101) étant une macrostation de base et la pluralité de dispositifs récepteurs (103a-c) étant une pluralité de stations de base de femtocellules.

**13.** Procédé (700) de distribution d'une pluralité de fichiers à une pluralité de dispositifs récepteurs (103a-c), comportant un premier dispositif récepteur (103a) et un deuxième dispositif récepteur (103b), dans lequel chacun de la pluralité de fichiers peut être segmenté en une pluralité de segments de fichier et chacun de la pluralité de dispositifs récepteurs (103a-c) comprend un cache (107a-c) pour la mise en cache d'un ou plusieurs de la pluralité de segments de fichier, le procédé (700) comprenant :

le codage (701) pour un ou plusieurs de la pluralité de fichiers d'un ou plusieurs segments de fichier de la pluralité de segments de fichier du fichier respectif ;

l'ordonnancement (703) de la transmission de la pluralité de segments de fichier à la pluralité de dispositifs récepteurs (103a-c) en utilisant une pluralité de files d'attente de segments de fichier, comportant une première file d'attente et une deuxième file d'attente, dans lequel le nombre de la pluralité de files d'attente est supérieur ou égal au nombre de la pluralité de dispositifs récepteurs (103a-c) et inférieur à deux fois le nombre de la pluralité de dispositifs récepteurs (103a-c) ; et

l'assignation (705) de la pluralité de files d'attente à la pluralité de dispositifs récepteurs (103a-c) de telle sorte que la première file d'attente comprenne des segments de fichier pour le premier dispositif récepteur (103a) et la deuxième file d'attente comprenne des segments de fichier pour le deuxième dispositif récepteur (103b) et des segments de fichier codés décodables par le premier dispositif récepteur (103a) et le deuxième dispositif récepteur (103b),

**caractérisé en ce que** le procédé comprend en outre :

l'assignation de la pluralité de files d'attente à la pluralité de dispositifs récepteurs (103a-c) en fonction d'une qualité de canal de communication respective associée à la pluralité de dispositifs récepteurs (103a-c), dans lequel la qualité de canal de communication associée au premier dispositif récepteur (103a) est supérieure à la qualité de canal de communication associée au deuxième dispositif récepteur (103b).

**14.** Produit de programme d'ordinateur comprenant un code de programme pour réaliser le procédé (700) selon la revendication 13, lorsqu'il est exécuté sur un ordinateur ou un processeur.

Fig. 1

EP 3 753 229 B1

Fig. 2

Fig. 3

EP 3 753 229 B1

- Send uncoded file to user 1

  S.1 user data

  $\tilde{Q}_1$

- Coded caching among user 1 and user 2

  S.1 user data

  Coded caching

  $\tilde{Q}_1$  $\tilde{Q}_2$

- Coded caching among user 1, 2 and 3

  S.1 user data

  Coded caching

  $\tilde{Q}_1$  $\tilde{Q}_2$  $\tilde{Q}_3$

Fig. 4

Fig. 5

Fig. 6a

Fig. 6b

700

Fig. 7

701
Encoding for one or more of a plurality of files one or more file segments of a plurality of file segments of the respective file

703
Scheduling the transmission of the plurality of file segments to a plurality of receiver devices using a plurality of queues of file segments, including a first queue and a second queue, wherein the number of the plurality of queues is larger than or equal to the number of the plurality of receiver devices and smaller than twice the number of the plurality of receiver devices

705
Assigning the plurality of queues to the plurality of receiver devices such that the first queue comprises file segments for the first receiver device and the second queue comprises file segments for the second receiver device and encoded file segments decodable by the first receiver device and the second receiver device

EP 3 753 229 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9560390 B
- US 9535837 B
- US 9401951 B

**Non-patent literature cited in the description**

- **M.A. MADDAH-ALI ; U. NIESEN.** Fundamental Limits of Caching. *IEEE Transactions on information Theory,* May 2014, vol. 60 (5), 2856-2867
- **A. DESTOUNIS, M. KOBAYASHI, G. PASCHOS, A. GHORBEL.** Alpha Fair Coded Caching. *15th International Symposium on Modeling and Optimization in Mobile, Ad Hoc, and Wireless Networks (WiOpt), France,* 15 May 2017
- **M. MADDAH-ALI ; U. NIESEN.** Decentralized Coded Caching Attains Order-Optimal Memory-Rate Tradeoff. *IEEE/ACM Transactions on Networking,* 2015, vol. 23 (4), 1029-1040